# EUROPÄISCHE PATENTSCHRIFT

(11) **EP 0 407 829 B1**
(45) Veröffentlichungstag und Bekanntmachung des Hinweises auf die Patenterteilung: **05.10.1994**
(21) Anmeldenummer: 90112399.2
(22) Anmeldetag: 29.06.1990
(51) Int. Cl.: C08G 18/80, C08G 18/10, C09D 175/00

(54) **Hitzehärtbare Gemische und ihre Verwendung zur Herstellung von Beschichtungen von hitzeresistenten Substraten**
Thermosetting mixtures and their use for the production of coatings for heat-resistant substrates
Mélanges thermodurcissables et leur utilisation pour la préparation de revêtements de substrats résistants à la chaleur

(30) Priorität: 11.07.1989 DE 3922767
(43) Veröffentlichungstag der Anmeldung: 16.01.1991
(73) Patentinhaber: BAYER AG, 51368 Leverkusen (DE)
(72) Erfinder: Schmalstieg, Lutz, Dr., D-5000 Köln 1 (DE); Nachtkamp, Klaus, Dr., D-4000 Düsseldorf 13 (DE); Noble, Karl-Ludwig, Dr., Pittsburgh, PA 15205 (US)

(56) Entgegenhaltungen:
- EP-A- 0 013 890
- EP-A- 0 059 962
- EP-A- 0 159 117
- DE-A- 3 221 558
- DE-A- 3 311 516
- DE-B- 2 131 299

## Beschreibung

Die Erfindung betrifft neue, durch Hitzeeinwirkung härtbare Gemische auf Basis einer Polyisocyanatkomponente mit blockierten Isocyanatgruppen und einer Reaktivkomponente mit primären Aminogruppen und die Verwendung der Gemische zur Herstellung von Beschichtungen auf hitzeresistenten Substraten.

Die DE-OS 1 644 813 und die EP-A-59962 beschreiben die Herstellung von Beschichtungsmassen auf Basis von Ketoxim-blockierten Polyisocyanaten und organischen Polyaminen. Diese Systeme härten bei Temperaturen oberhalb von ca. 120° C, sind jedoch mit dem Nachteil einer unzureichenden Lagerstabilität insbesondere bei Abwesenheit von Lösungsmitteln behaftet. Ferner besitzen die Systeme den Nachteil, daß sie nur in vergleichsweise dünnen Schichten appliziert werden können.

Die DE-AS 2 131 299 beschreibt durch Hitzeeinwirkung härtbare Gemische aus einer Polyisocyanatkomponente mit mit ε-Caprolactam blockierten Isocyanatgruppen und cycloaliphatischen Polyaminen. Die Systeme dieser Vorveröffentlichung weisen eine gute Lagerstabilität auf und eignen sich zur Herstellung von dickschichtigen Beschichtungen mit einem hohen mechanischen Eigenschaftsniveau. Der Nachteil dieser Systeme liegt jedoch in den vergleichsweise hohen Reaktionstemperaturen von ca. 160° C, die zur Aushärtung erforderlich sind.

Es war die der Erfindung zugrundeliegende Aufgabe, neue, durch Einwirkung von Hitze härtbare Systeme zur Verfügung zu stellen, die auch bei dickschichtiger Anwendung Beschichtungen mit einem hohen Eigenschaftsniveau ergeben und gleichzeitig die Vorteile einer guten Lagerstabilität bei Raumtemperatur und niedriger Einbrenntemperaturen in sich vereinen.

Diese Aufgabe konnte mit der Bereitstellung der nachstehend näher beschriebenen hitzehärtbaren Gemische gelöst werden.

Gegenstand der Erfindung sind durch Hitze härtbare Gemische bestehend aus
A) einer Polyisocyanat-Komponente, bestehend aus mindestens einem organischen Polyisocyanat mit reversibel blockierten Isocyonatgruppen
und
B) einer Reaktivkomponente, bestehend aus mindestens einer organischen Verbindung mit gegenüber Isocyanatgruppen reaktionsfähigen Gruppen,
dadurch gekennzeichnet, daß
die Komponente A) aus mindestens einem organischen Polyisocyanat des Molekulargewichtsbereichs (ohne Einbeziehung des Blockierungsmittels) 398 bis 25 000 besteht, dessen Isocyanatgruppen durch Reaktion mit einem sekundären Monoamin der Formel 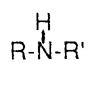
in welcher R und R' für gleiche oder verschiedene Reste stehen und aliphatische Kohlenwasserstoffreste mit 1 bis 18 Kohlenstoffatomen oder cycloaliphatische Kohlenwasserstoffreste mit 6 bis 13 Kohlenstoffatomen bedeuten, oder für welche R und R' zusammen mit dem Stickstoffatom einen, gegebenenfalls weitere Stickstoff- oder Sauerstoff-Heteroatome enthaltenden heterocyclischen Ring mit 5 oder 6 Ringgliedern bilden können,
blockiert sind und
die Komponente B) aus mindestens einem organischen Polyamin des Molekulargewichtsbereichs 60 bis 499 besteht, welches neben mindestens 2 primären Aminogruppen gegebenenfalls noch sekundäre Aminogruppen aufweist, und in einer solchen Menge vorliegt, die einem Äquivalentverhältnis von blockierten Isocyanatgruppen der Komponente A) zu primären und gegebenenfalls sekundären Aminogruppen der Komponente B) von 0,8 : 1 bis 1,2 : 1 entspricht.

In einer besonderen Ausführungsform der durch Hitzeeinwirkung härtbaren Gemische besteht die Komponente A) aus mindestens einem Isocyanatgruppen aufweisenden Prepolymeren auf Basis von (i) aromatischen Polyisocyanaten des Molekulargewichtsbereichs 174 bis 300 und (ii) Ether- und/oder Estergruppen aufweisenden organischen Polyhydroxylverbindungen des Molekulargewichtsbereichs 1000 bis 5000, dessen Isocyanatgruppen in mit sekundärem Monoamin blockierter Form vorliegen.

In einer weiteren Ausführungsform handelt es sich bei der Komponente B) um mindestens ein Diamin mit mindestens einem cycloaliphatischen Ring mit einem maximalen Molekulargewicht von 300.

Gegenstand der Erfindung ist auch die Verwendung dieser Gemische, gegebenenfalls in Kombination mit den in der Lacktechnologie üblichen Hilfs- und Zusatzstoffen zur Herstellung von Beschichtungen auf beliebigen, hitzeresistenten Substraten.

Die Verwendung von organischen Polyisocyanaten in mit sekundären Monoaminen blockierter Form in Kombination mit gegenüber Isocyanatgruppen reaktionsfähigen Verbindungen ist aus der DE-OS 3 221 558 zwar bereits bekannt, jedoch werden gemäß dieser Vorveröffentlichung insbesondere niedermolekulare Polyisocyanate in mit Monoamin blockierter Form mit höhermolekularen organischen Polyhydroxylverbindungen kombiniert. Irgendwelche konkreten Hinweise auf Systeme der erfindungsgemäßen Art können dieser Vorveröffentlichung nicht entnommen werden.

Die gleiche Feststellung rechtfertigt sich im Hinblick auf die Offenbarung der DE-OS 3 311 516, die Kombinationen von mit sekundären Monoaminen blockierten Polyisocyanaten mit höhermolekularen Polyadditions-, Polykondensations- oder Polymerisationsprodukten, die mindestens zwei OH- und/oder NH-Gruppen aufweisen, zum Gegenstand hat. Bei den konkret beschriebenen Reaktionspartnern für die blockierten Isocyanate handelt es sich jedoch nicht um organische Polyamine der erfindungsgemäß als Komponente B) einzusetzenden Art mit niederem Molekulargewicht sondern um die aus der Polyurethanchemie an sich bekannten höhermolekularen Polyhydroxylverbindungen oder um höhermolekulare, Hydroxylgruppen und Aminogruppen aufweisende Umsetzungsprodukte von niedermolekularen Diaminen mit Epoxidharzen. In den Ausführungsbeispielen werden im übrigen Einbrenntemperaturen von 140 bis 180° C genannt, so daß offensichtlich mit den Systemen dieser Vorveröffentlichung die obengenannte erfinderische Teilaufgabe einer niederen Einbrenntemperatur nicht gelöst werden kann.

In Anbetracht der Tatsache, daß Mischungen aus mit sekundären Monoaminen blockierten Isocyanaten und Polyalkoholen bereits bei vergleichsweise niedrigen Temperaturen ausgehärtet werden können, muß es als ausgesprochen überraschend bezeichnet werden, daß Mischungen aus mit sekundären Monoaminen blockierten Isocyanaten und den bekanntlich gegenüber blockierten Isocyanaten reaktiveren Polyaminen eine ausreichende Lagerstabilität aufweisen.

Die Herstellung der erfindungsgemäß als Komponente A) geeigneten Polyisocyanate mit mit sekundären Monoaminen blockierten Isocyanatgruppen erfolgt durch Umsetzung von bestimmten organischen Polyisocyanaten der nachstehend genannten Art mit bestimmten sekundären Monoaminen der ebenfalls nachstehend genannten Art bei Temperaturen von 0 bis 100°C, vorzugsweise 20 bis 50° C. Die Menge des bei der Blockierungsreaktion eingesetzten sekundären Monoamins sollte zumindest der Menge der zu blockierenden Isocyanatgruppen äquivalent sein. Oftmals ist ein geringer Überschuß an sekundärem Monoamin zweckmäßig, um eine vollständige Umsetzung zu gewährleisten. In der Regel beträgt der Überschuß nicht mehr als 20 Mol-%, vorzugsweise nicht mehr als 10 Mol-%, bezogen auf die zu blockierenden Isocyanatgruppen. Die Blockierungsreaktion kann gegebenenfalls in Anwesenheit inerter Lösungsmittel wie beispielsweise Lacklösungsmiteln der nachstehend beispielhaft genannten Art durchgeführt werden.

Zur Herstellung der blockierten Polyisocyanate A) geeignete Ausgangspolyisocyanate sind beliebige organische Polyisocyanate oder Polyisocyanatgemische mit einem (mittleren), als Gewichtsmittel bestimmten Molekulargewicht von 398 bis 25 000, vorzugsweise 1000 bis 8000.

Es handelt sich um die aus der Polyurethanchemie an sich bekannten Derivate einfacher organischer Polyisocyanate, insbesondere Biuret-, Isocyanurat- und/oder Urethangruppen aufweisende Derivate. Besonders bevorzugt handelt es sich bei den Derivaten um die an sich bekannten Isocyanatgruppen aufweisenden Prepolymeren, wie sie beispielsweise durch Umsetzung von höhermolekularen Polyhydroxylverbindungen mit überschüssigen, d.h. einem NCO/OH-Verhältnis von 1,5 - 2,5 entsprechenden Mengen eines Di- oder Polyisocyanates oder auch mit einem großen Überschuß an Di- bzw. Polyisocyanat und anschließender Entfernung des überschüssigen Polyisocyanates z.B. durch Dünnschichtdestillation erhalten werden können. Die Umsetzung erfolgt im allgemeinen bei 40 bis 140 °C, gegebenenfalls unter Mitverwendung von katalytischen Mengen (ca 0,001 bis 2 Gew.-%, bezogen auf das Gewicht der Ausgangskomponenten) an geeigneten Katalysatoren wie z.B. Triethylendiamin, Dibutylzinndilaurat oder Zinn-II-oktoat.

Zur Herstellung derartiger Prepolymerer eignen sich niedermolekulare Polyhydroxylverbindungen des Molekulargewichtsbereichs 62 bis 299 wie beispielsweise Ethylenglykol, Propylenglykol, Trimethylolpropan, 1,6-Dihydroxyhexan, niedermolekulare, Hydroxylgruppen aufweisende Ester derartiger Polyole mit Dicarbonsäure der nachstehend beispielhaft genannten Art oder niedermolekulare Ethoxylierungs- und/oder Propoxylierungsprodukte derartiger einfacher Polyole oder beliebige Gemische derartiger modifizierter oder nicht modifizierter Alkohole.

Vorzugsweise werden jedoch zur Herstellung der Prepolymeren höhermolekulare Polyhydroxylverbindungen des Molekulargewichtsbereichs 300 bis 20 000, vorzugsweise 1000 bis 5000, der aus der Polyurethanchemie an sich bekannten Art eingesetzt. Diese Polyhydroxylverbindungen tragen pro Molekül mindestens zwei Hydroxylgruppen und weisen im allgemeinen einen Hydroxylgruppengehalt von 0,17 bis 17, vorzugsweise 0,68 bis 5,1 Gew.-% auf.

Höhermolekulare Polyhydroxylverbindungen zur Herstellung der Prepolymeren sind beispielsweise die den gemachten Angaben entsprechende Polyester-Polyole auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Säureanhydride. Auch den obigen Angaben entsprechende, Hydroxylgruppen aufweisende Polylactone, insbesondere Poly-ε-caprolactone sind zur Herstellung der Prepolymeren bzw. Semiprepolymeren geeignet.

Zur Herstellung der Isocyanatgruppen aufweisenden Prepolymeren ebenfalls gut geeignet sind die, obigen Ausführungen entsprechenden, Polyether-Polyole, wie sie in an sich bekannter Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle.

Für die Alkoxylierungsreaktion geeignete Alkylenoxide sind insbesondere Ethylenoxid und/oder Propylenoxid, die in beliebiger Reihenfolge oder auch im Gemisch bei der Alkoxylierungsreaktion eingesetzt werden können.

Zur Herstellung der Prepolymeren ferner geeignet sind die, obigen Ausführungen entsprechenden, Hydroxylgruppen aufweisenden Polycarbonate, wie sie beispielsweise durch Umsetzung von einfachen Diolen der oben bereits beispielhaft genannten Art mit Diarylcarbonaten, beispielsweise Diphenylcarbonat oder Phosgen hergestellt werden können.

Geeignet für die Herstellung der endständigen NCO-Gruppen aufweisenden Prepolymere sind ferner Polythioetherpolyole, wie sie z.B. durch Polykondensation des Thiodiglykols mit sich selbst oder mit Diolen und/oder Polyolen der vorstehend genannten Art erhalten werden können.

Ferner eignen sich Polyacetale, wie z.B. die Polykondensationsprodukte aus Formaldehyd und Diolen bzw. Polyolen der vorstehend genannten Art, wie sie unter Verwendung von sauren Katalysatoren wie Phosphorsäure oder p-Toluolsulfonsäure erhalten werden können.

Beliebige Gemische der beispielhaft genannten Polyhydroxylverbindungen können ebenfalls verwendet werden.

Zur Herstellung der Isocyanatgruppen aufweisenden Prepolymeren geeignete Di- oder Polyisocyanate sind beispielsweise Hexamethylendiisocyanat, 1,3- und 1,4-Diisocyanatocyclohexan sowie beliebige Gemische dieser Isomeren, 1-Isocyanato-3,3,5-trimethyl-5-isocyanatomethyl-cyclohexan (Isophorondiisocyanat) oder 4,4′-Diisocyanato-dicyclohexylmethan.

Besonders bevorzugt wegen der erreichbaren, besonders niedrigen Einbrenntemperaturen sind jedoch aromatische Polyisocyanate wie beispielsweise 2,4-Diisocyanatotoluol oder dessen technischen Gemische mit vorzugsweise bis zu 35 Gew.-%, bezogen auf Gemisch, an 2,6-Diisocyanatotoluol, 4,4'-Diisocyanatodiphenylmethan, dessen technischen Gemische mit 2,4'- und gegebenenfalls 2,2'-Diisocyanatodiphenylmethan und/oder mit seinen höheren Homologen.

Geeignet sind auch die an sich bekannten Biuret- oder Isocyanuratgruppen aufweisenden Derivate der vorgenannten Diisocyanate, insbesondere des Hexamethylendiisocyanats. Weiterhin geeignet sind beispielsweise "gemischte" Derivate, d.h. solche, die sowohl Biuret- bzw. Isocyanurat- als auch Urethangruppen aufweisen. Derartige Derivate können beispielsweise so erhalten werden, daß man ein Biuret- oder Isocyanuratgruppen aufweisendes Polyisocyanat, beispielsweise auf Basis von Hexamethylendiisocyanat, mit einer unterschüssigen Menge einer Polyhydroxylverbindung der oben beispielhaft genannten Art modifiziert.

Zur Herstellung der erfindungsgemäß als Komponente A) eingesetzten blockierten Polyisocyanate geeignete sekundäre Monoamine sind solche der bereits oben genannten allgemeinen Formel, wobei R und R' die bereits oben genannte Bedeutung haben. Vorzugsweise werden solche Monoamine eingesetzt, für welche R und R' für gleich oder verschiedene Reste stehen und aliphatische Kohlenwasserstoffreste mit 1 bis 6 Kohlenstoffatomen oder cycloaliphatische Kohlenwasserstoffreste mit 6 bis 9 Kohlenstoffatomen bedeuten.

Beispiele für geeignete bzw. bevorzugt geeignete sekundäre Monoamine sind Dimethylamin, Diethylamin, Diisopropylamin, Di-n-butylamin, Diisobutylamin, N-Methyl-n-hexylamin, N-Methyl-stearylamin, N-Ethyl-cyclohexylamin, Dicyclohexylamin, Piperidin, Hexahydroazepin, Pyrrolidin oder Morpholin. Geeignet, jedoch weniger bevorzugt, sind solche sekundären Monoamine, die neben der sekundären Aminogruppe weitere gegenüber Isocyanatgruppen reaktionsfähige Gruppen, insbesondere Hydroxylgruppen aufweisen, die gegenüber Isocyanatgruppen eine geringere Reaktionsbereitschaft als sekundäre Aminogruppen aufweisen. Zu diesen Verbindungen gehören beispielsweise Aminoalkohole wie Diethanolamin oder Diisopropanolamin.

Das Molekulargewicht der blockierten Polyisocyanate kann ebenso wie das Molekulargewicht der unblockierten Polyisocyanate aus der Stöchiometrie der zur Herstellung dieser Verbindungen eingesetzten Ausgangsmaterialien oder, im Falle von über 1000 liegenden Molekulargewichten, gelpermeationschromatographisch unter Verwendung von Polystyrol als Eichsubstanz ermittelt werden.

Bei der Herstellung der erfindungsgemäßen Gemische können die blockierten Polyisocyanate A) erforderlichenfalls in üblichen Lacklösungsmitteln wie beispielsweise Ethylacetat, Butylacetat, Methylethylketon, Methylisobutylketon, Propylenglykolmonomethyletheracetat, Toluol, Xylol oder beliebigen Gemischen derartiger Lösungsmittel zum Einsatz gelangen.

Bei der Komponente B) der erfindungsgemäßen Gemische handelt es sich um Polyamine des Molekulargewichtsbereichs 60 bis 499, vorzugsweise 60 bis 300, die mindestens zwei und vorzugsweise zwei primäre Aminogruppen pro Molekül aufweisen. Geeignet sind beispielsweise Ethylendiamin, 1,2-Diaminopropan, 1,3-Diaminopropan, 1,4-Diaminobutan, 1,6-Diaminohexan, 2,2,4- und/oder 2,4,4-Trimethylhexamethylendiamin oder auch solche Polyamine, die neben mindestens zwei primären Aminogruppen noch sekundäre Aminogruppen aufweisen wie beispielsweise Diethylentriamin oder Triethylentetramin.

Besonders bevorzugt werden jedoch Polyamine, insbesondere Diamine, des genannten Molekulargewichtsbereichs eingesetzt, die einen oder mehrere cycloaliphatische Ringe aufweisen. Hierzu gehören beispielsweise 1,4-Diaminocyclohexan, 4,4′-Diamino-dicyclohexylmethan, 1,3-Diaminocyclopentan, 4,4′-Diamino-dicyclohexylsulfon,4,4′-Diamino-dicyclohexyl-propan-1,3, 4,4′-Diamino-dicyclohexyl-propan-2,2, 4-Isopropyl-1,2-diaminocyclohexan, 3,3′-Dimethyl-4,4′-diaminodicyclohexylmethan, 3-Aminomethyl-3,3,5-trimethylcyclohexylamin (Isophorondiamin) oder technisches Bis-aminomethyl-tricyclodecan, wie es unter der Bezeichnung "TCD-Diamin" von der Firma Hoechst AG vertrieben wird. 3,3′-Dimethyl-4,4′-diaminodicyclohexylmethan ist besonders bevorzugt.

In den erfindungsgemäßen Gemischen liegen die Komponenten A) und B) in solchen Mengen vor, die einem Äquivalentverhältnis von blockierten Isocyanatgruppen der Komponente A) zu primären und gegebenenfalls sekundären Aminogruppen der Komponente B) von 0,8:1 bis 1,2:1, vorzugsweise 0,9:1 bis 1,1:1 und besonders bevorzugt 0,95:1 bis 1,05:1 entsprechen.

Beschichtungsmittel, die die erfindungsgemäßen Gemische als Bindemittel enthalten, können als weitere Komponenten die in der Lacktechnologie üblichen Hilfs- und Zusatzmittel wie z.B. Lösungsmittel, Füllstoffe, Verlaufhilfsmittel, Pigmente u.dgl. enthalten.

Wie bereits erwähnt, besitzen die erfindungsgemäßen Gemische ein im Vergleich zum Stand der Technik günstigeres Verhältnis von Lagerstabilität zu Einbrenntemperatur. Dieses Verhältnis ist variierbar durch die Art des zur Blockierung eingesetzten Monoamins und durch das jeweils eingesetzte Polyisocyanat. So ist es beispielsweise möglich bei Raumtemperatur lagerstabile Gemische herzustellen, die bei Temperaturen von 130° C aushärten; es ist jedoch auch möglich Gemische herzustellen, die bei Temperaturen von ca 80° C aushärten, dann jedoch eine Raumtemperaturlagerstabilität von nur wenigen Tagen aufweisen. So kann durch gezielte Wahl des sekundären Monoamins und des Polyisocyanates das Verhältnis von Lagerstabilität zur Einbrenntemperatur dem jeweiligen Verwendungszweck angepaßt werden.

Überraschend und zugleich von Vorteil ist die Tatsache, daß sich die erfindungsgemäßen Gemische problemlos in dicken Schichten applizieren lassen. So ist es beispielsweise möglich Beschichtungen mit Trockenschichtdicken von 500 µm blasenfrei herzustellen.

Nach einer besonders bevorzugten Ausführungsform werden die erfindungsgemäßen Gemische zur Herstellung von Steinschlagschutzschichten an Kraftfahrzeugen verwendet. Die Beschichtungsmassen enthalten dann die für derartige Schutzschichten üblichen Füllstoffe, Pigmente und sonstige Zusatzstoffe. Da Steinschlagschutzschichten in der Regel in verhältnismäßig großen Schichtdicken aufgetragen werden ist es vielfach notwendig thixotropierende Mittel und Verdickungsmittel zuzusetzen, um ein Ablaufen der senkrechten Flächen zu vermeiden.

In den nachfolgenden Beispielen beziehen sich alle Prozentangaben auf Gewichtsprozente.

### Beispiel 1

3000 g eines Polyetherpolyols der OH-Zahl 48, hergestellt durch Propoxylierung von Trimethylolpropan, werden mit 1400 g 2,4-Diisocyanatotoluol 5 Stunden unter Rühren auf 70° C erhitzt. Anschließend wird der Überschuß an Diisocyanat durch Vakuum-Dünnschichtdestillation entfernt. Es entsteht ein Isocyanatendgruppen enthaltendes Prepolymer mit einem NCO-Gehalt von 3,2 %. Zu 1000 g dieses Prepolymeren werden bei Raumtemperatur 103 g Di-n-butylamin zügig zugetropft. Dabei erwärmt sich die Mischung auf ca. 40° C. Die Mischung wird ohne zu erwärmen so lange gerührt, bis das Produkt keine nachweisbaren Mengen an Isocyanat enthält.

1000 g des so hergestellten Produktes werden mit 82 g 3,3′-Dimethyl-4,4′-diaminodicyclohexylmethan vermischt (Äquivalentverhältnis von blockierten Isocyanatgruppen zu Aminogruppen = 1 : 1). Die Viskosität der Mischung beträgt 40 000 mPa.s/22°C. Nach 7-tägiger Lagerung bei Raumtemperatur beträgt die Viskosität 58.000 mPas/22° C. Eine Probe wird auf mit Elektrotauchlack beschichtetes Stahlblech aufgebracht. Durch Wärmebehandlung von 30 Minuten bei 130° C entsteht ein hochelastischer Film mit ausgezeichneter Haftfestigkeit, Blasenfreiheit ist bis zu einer Trockenschichtdicke von 450 µm gewährleistet.

### Beispiel 2

Zu 1000 g des Prepolymeren aus Beispiel 1 werden bei Raumtemperatur 86 g N-Methylcyclohexylamin zugetropft. Die Mischung wird ohne zu erwärmen so lange gerührt, bis das Produkt keine nachweisbaren Mengen an Isocyanat enthält.

1000 g des so hergestellten Produkte werden mit 83,5 g 3,3′-Dimethyl-4,4′-diaminodicyclohexylmethan vermischt (Äquivalentverhältnis von blockierten Isocyanatgruppen zu Aminogruppen = 1 : 1). Die Viskosität der Mischung beträgt 95 000 mPa.s/22° C. Nach 4-tägiger Lagerung bei Raumtemperatur beträgt die Viskosität 110 000 mPa.s/22° C.

Ein auf mit Elektrotauchlack beschichtetes Stahlblech aufgebrachter Film kann bis zu Trockenschichtdicken von 500 µm blasenfrei ausgehärtet werden durch Wärmebehandlung von 30 Minuten bei 130° C. Dabei erhält man hochelastische Filme von ausgezeichneter Haftfestigkeit.

### Beispiel 3

Zu 1000 g des Prepolymeren aus Beispiel 1 werden bei Raumtemperatur 68 g Piperidin zugetropft. Die Mischung wird so lange gerührt, bis das Produkt keine nachweisbaren Mengen an Isocyanat enthält.

1000 g des so hergestellten blockierten Prepolymers werden mit 85 g 3,3′-Dimethyl-4,4′-diaminodicyclohexylmethan vermischt (Äquivalentverhältnis von blockierten Isocyanatgruppen zu Aminogruppen = 1 : 1). Die Mischung besitzt eine Anfangsviskosität von 100 000 mPa.s/22° C. Nach 7-tägiger Lagerung bei Raumtemperatur beträgt die Viskosität 115 000 mPa.s. Ein auf eine Glasplatte aufgetragener Film kann durch Wärmebehandlung von 30 Minuten bei 130° C ausgehärtet werden. Dabei erhält man einen elastischen Film, der in seinen Eigenschaften denen aus Beispiel 1 und Beispiel 2 entspricht.

### Beispiel 4

Zu 1000 g des Prepolymeren aus Beispiel 1 werden bei Raumtemperatur 81 g Diisopropylamin zugetropft. Die Mischung wird so lange gerührt, bis das Produkt keine nachweisbare Menge Isocyanat enthält. 1000 g des blockierten Produktes werden mit 84 g 3,3′-Dimethyl-4,4′-diamino-dicyclohexylmethan vermischt (Äquivalentverhältnis von blockierten Isocyanatgruppen zu Aminogruppen = 1 : 1). Die Mischung besitzt eine Anfangsviskosität von 64 000 mPa.s/22° C. Nach 3-tägiger Lagerung bei Raumtemperatur beträgt die Viskosität 160 000 mPa.s/22° C. Diese Mischung läßt sich bei besonders niedriger Temperatur einbrennen; ein auf eine Glasplatte aufgebrachter Lackfilm kann durch Wärmebehandlung von 30 Minuten bei 80° C vernetzt werden Blasenfreiheit ist bis zu einer Schichtdicke von 500 µm gewährleistet. Die Eigenschaften des Films entsprechen denen aus Beispiel 1 bis 3.

### Beispiel 5

1000 g einer 60 %igen Lösung eines Prepolymeren aus 8 Mol 2,4-Diisocyanatotoluol, 2 Mol Trimethylolpropan, 1 Mol Diethylenglykol und 1 Mol eines Polypropylenglykols mit einem Molekulargewicht von 1000 in einem Lösungsmittelgemisch aus gleichen Teilen Xylol und Methoxypropylacetat werden bei Raumtemperatur mit 174 g Dibutylamin so lange gerührt, bis das Produkt keine nachweisbare Menge Isocyanat enthält. 1000 g des Produktes werden mit 130 g 3,3′-Dimethyl-4,4′-diamino-dicyclohexylmethan vermischt (Äquivalentverhältnis von blockierten Isocyanatgruppen zu Aminogruppen = 1 : 1). Die Anfangsviskosität der Mischung beträgt 30 000 mPa.s/22° C. Die Viskosität beträgt nach einer Lagerdauer von 7 Tagen bei Raumtemperatur 41 000 mPa.s/22° C. Ein auf mit Elektrotauchlack beschichteten Stahlblech aufgetragener Lackfilm kann durch Wärmebehandlung von 30 Minuten bei 130° C vernetzt werden. Dabei erhält man glänzende Filme, die eine ausgezeichnete Lösungsmittelbeständigkeit aufweisen. Die Filme zeichnen sich durch hohe Elastizität bei gleichzeitig guter Härte aus.

### Beispiel 6

Ein NCO-Prepolymer aus 31 Gew.-Teilen Diisocyanatodiphenylmethan (technisches Gemisch aus gleichen Gewichtsteilen 2,4′- und 4,4′-Diisocyanatodiphenylmethan) und 69 Gew.-Teilen eines Polyetherdiols des Molekulargewichts 4000, hergestellt durch Propoxylierung von Propylenglykol und anschließende Ethoxylierung des Propoxylierungsprodukts (PO:EO-Gewichtsverhältnis = 86:14) wird 65 %ig in einem Gemisch aus gleichen Teilen Methoxypropylacetat und Xylol gelöst. Der NCO-Gehalt der Lösung liegt bei 8,6 %.

Zu 1000 g dieser Lösung werden bei Raumtemperatur 277 g Di-n-butylamin zügig zugetropft. Sobald keine freien Isocyanatgruppen nachweisbar sind, verrührt man mit 191 g 3,3′-Dimethyl-4,4′-diaminodicyclohexylmethan (Äquivalentverhältnis von blockierten Isocyanatgruppen zu Aminogruppen = 1 : 1).

Man erhält eine Mischung mit einer Viskosität von 800 mPa.s/22° C. Nach 14-tägiger Lagerung bei Raumtemperatur kann kein Viskositätsanstieg beobachtet werden. Ein auf eine Glasplatte aufgebrachter Lackfilm kann durch Wärmebehandlung von 30 Minuten bei 130° C vernetzt werden. Dabei erhält man einen glänzenden Lackfilm mit guter Lösungsmittelbeständigkeit.

### Beispiel 7

80 Gew.-Teile eines Polyetherpolyols des Molekulargewichts 2000, hergestellt durch Propoxylierung von Propylenglykol und 20 Gew.-Teile Isophorondiisocyanat werden unter Zusatz von 0,2 Gew.-Teilen Dibutylzinndilaurat bei 100° C zu einem NCO-Prepolymeren mit einem NCO-Gehalt von 4 % umgesetzt. 1000 g dieses Prepolymeren werden mit 101 g Diisopropylamin bei Raumtemperatur zur Reaktion gebracht. Nach Beendigung der Blockierungsreaktion wird mit 85 g technischem Bis-aminomethyltricyclodecan ("TCD-Diamin" der Firma Hoechst AG) verrührt (Äquivalentverhältnis von blockierten Isocyanatgruppen zu Aminogruppen = 1 : 1).

Man erhält eine Mischung mit einer Viskosität von 85 000 mPa.s/22° C. Nach 7-tägiger Lagerung bei Raumtemperatur kann keine Viskositätserhöhung beobachtet werden. Ein auf eine Glasplatte aufgebrachter Lackfilm kann durch Wärmebehandlung von 30 Minuten bei 140° C vernetzt werden. Dabei erhält man hochelastische Filme mit ausgezeichneten mechanischen Eigenschaften.

### Beispiel 8

1000 g des blockierten Prepolymeren aus Beispiel 7 werden mit 77 g Isophorondiamin vermischt (Äquivalentverhältnis von blockierten Isocyanatgruppen zu Aminogruppen = 1 : 1,05). Die Anfangsviskosität der Mischung beträgt 80 000 mPa.s/22° C. Nach 7-tägiger Lagerung bei Raumtemperatur kann keine Viskositätserhöhung beobachtet werden. Durch Wärmebehandlung von 30 Minuten bei 140° C kann ein auf eine Glasplatte aufgezogener Lackfilm ausgehärtet werden. Man erhält einen glänzenden hochelastischen Film.

### Beispiel 9

Ein Gemisch aus 15 Gew.-Teilen eines Polyesterpolyols aus 9,9 Mol Phthalsäureanhydrid, 0,13 Mol Maleinsäureanhydrid, 4,8 Mol Hexandiol-1,6, 4,4 Mol Perhydrobisphenol A und 2 Mol Trimethylolpropan, 50 Gew.-Teile eines Biuretpolyisocyanats auf Basis von 1,6-Diisocyanatohexan mit einem NCO-Gehalt von 22 %, 15 Gew.-Teile Xylol und 25 Gew.-Teile Methoxypropylacetat wird auf 100° C erhitzt, bis ein konstanter NCO-Gehalt der 65 %igen Lösung von 9,8 % erreicht ist.

1000 g der so erhaltenen Lösung werden bei Raumtemperatur mit 425 g Dicyclohexylamin umgesetzt (Äquivalentverhältnis von blockierten Isocyanatgruppen zu Aminogruppen = 1 : 1). Nachdem kein freies Isocyanat mehr nachweisbar ist, versetzt man mit 50 g Ethylendiamin. Man erhält eine hochviskose lagerstabile Mischung.

Ein auf eine Glasplatte aufgezogener Lackfilm kann durch Wärmebehandlung von 30 Minuten bei 140° C vernetzt werden. Der klare Lackfilm besitzt eine ausgezeichnete Lösungsmittelbeständigkeit.

### Beispiel 10

1000 g des blockierten Prepolymeren aus Beispiel 9 werden mit 127 g eines Isomerengemisches aus 2,2,4- und 2,4,4-Trimethylhexamethylendiamin vermischt (Äquivalentverhältnis von blockierten Isocyanatgruppen zu Aminogruppen = 1 : 0,98). Man erhält eine lagerstabile hochviskose Mischung, die durch Wärmebehandlung von 30 Minuten bei 140° C ausgehärtet werden kann.

### Beispiel 11

1000 g des blockierten Prepolymeren aus Beispiel 9 werden mit 155 g des in Beispiel 7 genannten technischen Diamins vermischt (Äquivalentverhältnis von blockierten Isocyanatgruppen zu Aminogruppen 1 : 0,98). Dabei erhält man eine hochviskose lagerstabile Mischung. Ein auf eine Glasplatte aufgebrachter Film läßt sich durch Wärmebehandlung von 30 Minuten bei 140° C aushärten. Man erhält einen Lackfilm mit hoher Härte und ausgezeichneter Lösungsmittelbeständigkeit.

### Beispiel 12

Herstellung einer Steinschlagschutzbeschichtung:
100 Gew.-Teile des blockierten Prepolymers aus Beispiel 1, 46,2 Gew.-Teile des blockierten Prepolymers aus Beispiel 5, 13 Gew.-Teile 3,3′-Dimethyl-4,4′-diaminodicyclohexylmethan, 14,3 Gew.-Teile Titandioxid (®Bayertitan R-UB-2), 1,4 Gew.-Teile Eisen-II-III-oxid (®Bayferrox 303 T), 114,4 Gew.-Teile Bariumsulfat, 4,3 Gew.-Teile pyrogene Kieselsäure und 76,3 Gew.-Teile einer Mischung aus Butylacetat, Methoxybutylacetat, Pineöl im Mischungsverhältnis 10:40:50 werden vermischt. Die Anfangsviskosität des Primers beträgt 1450 mPa.s/22° C. Nach 3-tägiger Lagerung beträgt die Viskosität 1800 mPa.s/22° C. Die Steinschlagschutzgrundierung wurde auf mit Elektrotauchlack beschichtete Stahlbleche appliziert (Luftspritzen bei 30° C) und 30 Minuten bei 130° C eingebrannt. Blasenfreiheit ist bis zu einer Schichtdicke von 400 µm gewährleistet.

Zur Prüfung der Steinschlagfestigkeit wurde das Blech kontinuierlich mit Feinsplitt beschossen, bis zum Sichtbarwerden des Substrates (Daimler-Benz-Test).

| | |
|---|---|
| Luftdruck: | 0,6 bar |
| Schichtdicke: | 176 µm |
| Beschußzeit: | 5′35˝ |

### Beispiel 13 (Vergleichsbeispiel im Hinblick auf DE-AS 2 131 299)

Zu 1000 g des Prepolymeren aus Beispiel 1 werden bei 40° C unter Rühren 100 g ε-Caprolactam zugegeben. Die Reaktionsmischung wird auf 90° C erhitzt und so lange bei dieser Temperatur gerührt, bis das Produkt keine nachweisbare Menge Isocyanat mehr enthält. 1000 g des blockierten Prepolymeren werden mit 82,5 g 3,3′-Dimethyl-4,4′-diamino-dicyclohexylmethan vermischt. Die Viskosität der Mischung beträgt 30 000 mPa.s/22° C. Nach 7-tägiger Lagerung bei Raumtemperatur kann keine Viskositätserhöhung beobachtet werden. Zur Aushärtung ist eine Wärmebehandlung von 30 Minuten bei 160° C notwendig. Nach einer Wärmebehandlung von 30 Minuten bei 140° C werden klebrige Beschichtungen erhalten.

### Beispiel 14 (Vergleichsbeispiel im Hinblick auf DE-OS 1 644 813)

a) Zu 1000 g des Prepolymeren aus Beispiel 1 werden bei 50° C 70 g Methylethylketoxim innerhalb von 3 Stunden zugetropft. Die Mischung wird so lange bei 50° C gerührt, bis kein freies Isocyanat mehr vorhanden ist.
b) Zu 1000 g des Prepolymeren aus Beispiel 5 werden bei 50° C 117 g Methylethylketoxim innerhalb von 3 h zugetropft. Die Mischung wird so lange bei 50° C gerührt, bis kein freies Isocyanat mehr nachweisbar ist.

Herstellung einer Steinschlagschutzbeschichtung:
100 Gew.-Teile des blockierten Prepolymeren aus a), 46,5 Gew.-Teile des blockierten Prepolymeren aus b), 13 Gew.-Teile 3,3′-Dimethyl-4,4′-diamino-dicyclohexylmethan, 14,3 Gew.-Teile Titandioxid (®Bayertitan R-UB-20), 1,4 Gew.-Teile Eisen-II-III-oxid (®Bayferrox 303 T), 114,4 Gew.-Teile Bariumsulfat, 4,3 Gew.-Teile pyrogene Kieselsäure und 76,3 Gew.-Teile einer Mischung aus Butylacetat, Methoxybutylacetat und Pineöl im Mischungsverhältnis 10:40:50 werden vermischt. Die Anfangsviskosität des Primers beträgt 850 mPa.s/22° C. Nach 3-tägiger Lagerung bei Raumtemperatur beträgt die Viskosität 1070 mPa.s/22° C, nach 7-tägiger Lagerung bei Raumtemperatur beträgt die Viskosität 1540 mPa.s/22° C.

Die Steinschlagschutzbeschichtung wurde mit auf Elektrotauchlack beschichtetes Stahlblech aufgetragen (Luftspritzen bei 30° C) und 30 Minuten bei 140° C eingebrannt. Blasenfreiheit ist nur bis zu einer Schichtdicke von 150 µm gewährleistet.

## Patentansprüche

1. Durch Hitzeeinwirkung härtbare Gemische bestehend aus
A) einer Polyisocyanat-Komponente, bestehend aus mindestens einem organischen Polyisocyanat mit reversibel blockierten Isocyanatgruppen
und
B) einer Reaktivkomponente, bestehend aus mindestens einer organischen Verbindung mit gegenüber Isocyanatgruppen reaktionsfähigen Gruppen,
dadurch gekennzeichnet, daß
die Komponente A) aus mindestens einem organischen Polyisocyanat des Molekulargewichtsbereichs (ohne Einbeziehung des Blockierungsmittels) 398 bis 25 000 besteht, dessen Isocyanatgruppen durch Reaktion mit einem sekundären Monoamin der Formel 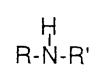 in welcher R und R' für gleiche oder verschiedene Reste stehen und aliphatische Kohlenwasserstoffreste mit 1 bis 18 Kohlenstoffatomen oder cycloaliphatische Kohlenwasserstoffreste mit 6 bis 13 Kohlenstoffatomen bedeuten, oder für welche R und R' zusammen mit dem Stickstoffatom einen, gegebenenfalls weitere Stickstoff- oder Sauerstoff-Heteroatome enthaltenden heterocyclischen Ring mit 5 oder 6 Ringgliedern bilden können,
blockiert sind und
die Komponente B) aus mindestens einem organischen Polyamin des Molekulargewichtsbereichs 60 bis 499 besteht, welches neben mindestens 2 primären Aminogruppen gegebenenfalls noch sekundäre Aminogruppen aufweist, und in einer solchen Menge vorliegt, die einem Äquivalentverhältnis von blockierten Isocyanatgruppen der Komponente A) zu primären und gegebenenfalls sekundären Aminogruppen der Komponente B) von 0,8 : 1 bis 1,2 : 1 entspricht.

2. Durch Hitzeeinwirkung härtbare Gemische gemäß Anspruch 1, dadurch gekennzeichnet, daß die Komponente A) aus mindestens einem Isocyanatgruppen aufweisenden Prepolymeren auf Basis von (i) aromatischen Polyisocyanaten des Molekulargewichtsbereichs 174 bis 300 und (ii) Ether- und/oder Estergruppen aufweisenden organischen Polyhydroxylverbindungen des Molekulargewichtsbereichs 1000 bis 5000 besteht, dessen Isocyanatgruppen in mit sekundärem Monoamin blockierter Form vorliegen.

3. Durch Hitzeeinwirkung härtbare Gemische gemäß Anspruch 1 und 2, dadurch gekennzeichnet, daß es sich bei der Komponente B) um mindestens ein Diamin mit mindestens einem cycloaliphatischen Ring mit einem maximalen Molekulargewicht von 300 handelt.

4. Verwendung der Gemische gemäß Anspruch 1 bis 3, gegebenenfalls in Kombination mit den in der Lacktechnologie üblichen Hilfs- und Zusatzstoffen zur Herstellung von Beschichtungen auf beliebigen, hitzeresistenten Substraten.

5. Verwendung gemäß Anspruch 4 zur Herstellung von steinschlagfesten Beschichtungen von Kraftfahrzeugteilen.

## Claims

1. Mixtures curable by the action of heat consisting of
A) a polyisocyanate component consisting of at least one organic polyisocyanate having reversibly blocked isocyanate groups
and
B) a reactive component consisting of at least one organic compound having groups capable of reacting with isocyanate groups,
characterised in that
component A) consists of at least one organic polyisocyanate in the molecular weight range (not including the blocking agent) of from 398 to 25 000, wherein the isocyanate groups are blocked by reaction with a secondary monoamine of the formula 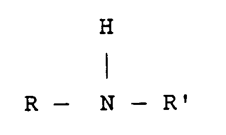 wherein R and R' represent identical or different radicals and signify aliphatic hydrocarbon radicals having 1 to 18 carbon atoms or cycloaliphatic hydrocarbon radicals having 6 to 13 carbon atoms, or wherein R and R' together with the nitrogen atom can form a heterocyclic ring having 5 or 6 ring members and optionally contain further nitrogen or oxygen heteroatoms,
and
component B) consists of at least one organic polyamine in the molecular weight range of from 60 to 499, which has, in addition to at least 2 primary amino groups, optionally further secondary amino groups, and is present in a quantity corresponding to an equivalent ratio of blocked isocyanate groups of component A) to primary and optionally secondary amino groups of component B) of from 0.8 : 1 to 1.2 : 1.

2. Mixtures curable by the action of heat according to claim 1, characterized in that component A) consists of at least one prepolymer containing isocyanate groups based on (i) aromatic polyisocyanates in the molecular weight range of from 174 to 300 and (ii) organic polyhydroxyl compounds in the molecular weight range of from 1000 to 5000 and possessing ether groups and/or ester groups, in which the isocyanate groups are blocked with secondary amines.

3. Mixtures curable by the action of heat according to claims 1 and 2, characterized in that component B) consists of at least one diamine possessing at least one cycloaliphatic ring and having a maximum molecular weight of 300.

4. The use of the mixtures according to claims 1 to 3, optionally in combination with the conventional auxiliary substances and additives used in lacquer technology, for the production of coatings on any heat-resistant substrates.

5. The use according to claim 4 for the production of coatings resistant to the impact of stones on motor vehicle parts.

## Revendications

1. Mélanges durcissables sous l'action de la chaleur, qui consistent en
A) un composant polyisocyanate consistant lui-même en au moins un polyisocyanate organique dont les groupes isocyanate sont bloqués de manière réversible et
B) un composant réactif consistant en au moins un composé organique contenant des groupes réactifs avec les group isocyanate,
caractérisés en ce que
le composant A) consiste en au moins un polyisocyanate organique de poids moléculaire (non tenu compte de l'agent bloquant) 393 à 25 000, dont les groupes isocyanate sont bloqués par réaction avec une monoamine secondaire de formule 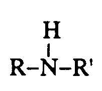 dans laquelle R et R', ayant des significations identiques ou différentes, représentent chacun un radical hydrocarboné aliphatique en C₁-C₁₈ ou un radical hydrocarboné cycloaliphatique en C₆-C₁₃, ou bien R et R' forment ensemble et avec l'atome d'azote un noyau hétérocyclique à 5 ou 6 chaînons contenant éventuellement d'autres hétéroactomes d'azote ou d'oxygène, et
le composant B) consiste en au moins une polyamine organique de poids moléculaire 60 à 499 qui, avec au moins deux groupes amino primaires, contient encore le cas échéant des groupes amino secondaires, et est présente en quantité correspondant à un rapport de 0,8 : 1 0 1,2 : 1 entre les équivalents de groupes isocyanate bloqués du composant A) et les équivalents de groupes amino primaires et éventuellement secondaires du composant B).

2. Mélanges durcissables sous l'action de la chaleur selon la revendication 1, caractérisés en ce que le composant A) consiste en au moins un prépolymère contenant des groupes isocyanate, à base de (i) des polyisocyanates aromatiques de poids moléculaire 174 à 300 et (ii) des composés organiques polyhydroxylés contenant des groupes éther et/ou ester, de poids moléculaire 1 000 à 5 000, dont les groupes isocyanate sont bloqués par une monoamine secondaire.

3. Mélanges durcissables sous l'action de la chaleur selon les revendications 1 et 2, caractérisés en ce que le composant B) consiste en au moins une diamine à au moins un noyau cycloaliphatique, de poids moléculaire maximum 300.

4. Utilisation des mélanges selon les revendications 1 à 3, éventuellement en combinaison avec des produits auxiliaires et additifs usuels dans l'industrie des peintures et vernis, pour l'application de revêtements sur des supports quelconques résistant à la chaleur.

5. Utilisation selon la revendication 4, pour l'application de revêtements résistant aux jets de pierres sur des parties de véhicules.
